# EUROPÄISCHE PATENTSCHRIFT

(11) **EP 4 260 089 B1**
(45) Veröffentlichungstag und Bekanntmachung des Hinweises auf die Patenterteilung: **18.02.2026**
(21) Anmeldenummer: 21824326.9
(22) Anmeldetag: 01.12.2021
(51) Int. Cl.: G01S 7/52, G01S 15/931

(54) **ULTRASCHALLSENSORSYSTEM FÜR EIN KRAFTFAHRZEUG UND VERFAHREN ZUM BETREIBEN DES ULTRASCHALLSENSORSYSTEMS**
ULTRASONIC SENSOR SYSTEM FOR A MOTOR VEHICLE AND METHOD FOR OPERATING THE ULTRASONIC SENSOR SYSTEM
SYSTÈME DE CAPTEUR ULTRASONORE POUR UN VÉHICULE À MOTEUR ET PROCÉDÉ DE FONCTIONNEMENT DU SYSTÈME DE CAPTEUR ULTRASONORE

(30) Priorität: 08.12.2020 DE 102020132634
(43) Veröffentlichungstag der Anmeldung: 18.10.2023
(73) Patentinhaber: Valeo Schalter und Sensoren GmbH, 74321 Bietigheim-Bissingen (DE)
(72) Erfinder: HAAG, Fabian, 74321 Bietigheim-Bissingen (DE); ASCHKENASI, Denis, 74321 Bietigheim-Bissingen (DE)
(86) Internationale Anmeldenummer: PCT/EP2021/083674
(87) Internationale Veröffentlichungsnummer: WO 2022/122490

(56) Entgegenhaltungen:
- DE-A1- 102017 105 043
- DE-A1- 102018 124 024

## Beschreibung

Die vorliegende Erfindung betrifft das Gebiet der Ultraschallsensorik für Kraftfahrzeuge und spezieller ein Ultraschallsensorsystem für ein Kraftfahrzeug und ein Verfahren zum Betreiben des Ultraschallsensorsystems.

Bekannt sind Ultraschallsensoren mit einer elektroakustischen Wandleranordnung zum Erzeugen und Detektieren von Ultraschallwellen, die zur Messung einer Distanz zu einem Objekt im Kraftfahrzeugumfeld verwendet werden. Dabei wird eine Ultraschallwelle ausgesendet und ein aus dem Kraftfahrzeugumfeld zurücklaufendes Echosignal erfasst. Anhand der Signallaufzeit wird die Distanz zu dem Objekt bestimmt. Derartige Messungen werden etwa von einem Fahr- oder Parkassistenzsystem des Kraftfahrzeugs verwendet.

Aufgrund von intern oder extern induzierten Veränderungen der elektroakustischen Wandleranordnung, wie beispielsweise eines alterungsabhängigen Domäneneffekts eines Piezoelements, kann es im Laufe der Zeit zu einer Verfälschung des Messergebnisses oder einem Ausfall des Ultraschallsensors kommen. Daher können an einem Kraftfahrzeug mehrere Ultraschallsensoren vorgesehen werden, und die von den einzelnen Ultraschallsensoren gelieferten Messwerte können vor ihrer Auswertung einer Plausibilitätsprüfung unterzogen werden. Jedoch kann eine solche Plausibilitätsprüfung im Falle einer allmählichen Veränderung der elektrischen Kenngrößen des Ultraschallsensors auch grundsätzlich brauchbare Messergebnisse fälschlicherweise aussortieren.

Die EP 2 347 231 B1 lehrt eine Funktionsüberwachungsvorrichtung, die eine Impedanzkennlinie eines Ultraschallsensors in Abhängigkeit einer Anregungsfrequenz ermittelt. Der Ultraschallsensor wird bei der Ermittlung der Impedanzkennlinie mit einer im Vergleich zu einem normalen Messbetrieb kleineren und konstanten Amplitude angeregt.

Die DE 10 2012 216 968 A1 lehrt, dass eine elektrische Impedanz eines Ultraschallwandlers durch ein Testsignal gemessen wird und Veränderungen der Impedanz über der Frequenz des Testsignals mit einer Referenz hinsichtlich im Impedanzverlauf vorhandener Extrempunkte verglichen werden. Das Testsignal weist eine Amplitude auf, die sich von der zur Distanzmessung verwendeten Amplitude unterscheidet.

Die DE 10 2014 201 482 A1 lehrt, dass eine Impedanzkurve eines Ultraschallwandlers mit einem Sweep eines Anregungsignals über einen vorgegebenen Frequenzbereich mit konstanter Spannungsamplitude ermittelt wird.

Die DE 10 2017 203 136 A1 lehrt eine Überwachungseinheit eines Schallsensors, die eine Impedanz eines Schallwandlers für unterschiedliche Anregungsfrequenzen misst. Der Schallwandler wird dabei mit Amplituden angeregt, die vorzugsweise eine oder mehrere Zehnerpotenzen kleiner sind als die zur Distanzvermessung verwendeten Amplituden.

Die DE 10 2018 124 024 A1 beschreibt einen Ultraschallsensor mit Prüfsteuereinrichtung.

Vor diesem Hintergrund liegt der vorliegenden Erfindung als Aufgabe zugrunde, die Zustandsermittlung eines Ultraschallsensors zu verbessern.

Demgemäß wird ein Ultraschallsensorsystem für ein Kraftfahrzeug vorgeschlagen. Das vorgeschlagene Ultraschallsensorsystem umfasst einen Ultraschallsensor mit einer elektroakustischen Wandleranordnung zum Erzeugen und Detektieren von Ultraschallwellen und einer elektrischen Prüfeinrichtung, die dazu eingerichtet ist, ein elektrisches Prüfsignal an die elektroakustische Wandleranordnung auszugeben und ein elektrisches Antwortsignal der elektroakustischen Wandleranordnung auf das elektrische Prüfsignal zu erfassen. Das vorgeschlagene Ultraschallsensorsystem umfasst ferner eine Prüfsteuereinrichtung, die dazu eingerichtet ist, mittels der elektrischen Prüfeinrichtung unter Variieren einer Frequenz und einer Amplitude des elektrischen Prüfsignals an mehreren Messpunkten eine Kenngröße des elektrischen Antwortsignals zu erfassen.

Die elektroakustische Wandleranordnung kann insbesondere eine Ultraschallmembran, eine an der Ultraschallmembran angebrachte Schallwandlereinrichtung mit mechanischkapazitivem, mechanisch-resistivem, magnetostriktivem oder elektrostriktivem Arbeitsprinzip, wie beispielsweise ein Piezoelement, sowie eine Koppelschaltung zur Impedanzanpassung der Schallwandlereinrichtung umfassen.

Insbesondere kann eine solche elektroakustische Wandleranordnung als nichtlineare elektrische Anordnung mit einer resistiven, einer induktiven und einer kapazitiven Komponente aufgefasst werden.

Durch das vorgeschlagene Erfassen einer elektrischen Kenngröße an mehreren Messpunkten unter Variation nicht nur der Frequenz, sondern auch der Amplitude des Prüfsignals kann vorteilhafterweise ein mehrdimensionales Kennfeld der elektroakustischen Wandleranordnung mindestens abschnittsweise erfasst werden und somit insbesondere einer nichtlinearen Amplitudenabhängigkeit der Kenngröße Rechnung getragen werden.

Durch eine derartige Berücksichtigung der Amplitudenabhängigkeit der elektrischen Kenngrößen der elektroakustischen Wandleranordnung kann eine wesentlich verbesserte Charakterisierung des Zustandes des Ultraschallsensors möglich sein und demgemäß kann von einer übergeordneten Steuervorrichtung des Kraftfahrzeugs wesentlich besser auf Zustandsänderungen des Ultraschallsensors reagiert werden.

Der Begriff "Messpunkt" kann insbesondere eine konkrete Kombination aus genau einer Frequenz und genau einer Amplitude des Prüfsignals bezeichnen.

Die Prüfsteuereinrichtung kann demgemäß insbesondere mehrere Kenngrößen erfassen, eine für jeden Messpunkt. Die an den mehreren Messpunkten erfassten Kenngrößen können insbesondere eine Kennlinie oder ein zwei- oder mehrdimensionales Kennfeld der elektroakustischen Wandleranordnung des Ultraschallsensors bilden.

Das elektrische Prüfsignal kann insbesondere eine Schwingung einer an die elektroakustischen Wandleranordnung angelegten elektrischen Kenngröße, wie Strom oder Spannung, mit einer definierten Amplitude und einer definierten Frequenz sein. An einem jeweiligen der Messpunkte kann die Amplitude und die Frequenz des Prüfsignals, insbesondere für eine Dauer des Erfassens der Kenngröße des Antwortsignals an dem Messpunkt, konstant sein.

Das elektrische Antwortsignal kann insbesondere eine Schwingung einer der Kenngrößen, wie Spannung oder Strom, sein, die an der elektroakustischen Wandleranordnung erfasst wird, während das elektrische Prüfsignal an die elektroakustische Wandleranordnung angelegt wird.

Die elektrische Prüfeinrichtung kann durch eine in dem Ultraschallsensor bereitgestellte elektrische Schaltung ausgebildet sein, die von der Prüfsteuereinrichtung zum Erzeugen des elektrischen Prüfsignals mit einer von der Prüfsteuereinrichtung jeweils vorgegebenen Frequenz und Amplitude angesteuert werden kann und von der Prüfsteuereinrichtung zum Erfassen des elektrischen Antwortsignals verwendet werden kann.

Die Prüfsteuereinrichtung kann in den Ultraschallsensor integriert sein oder extern zu dem Ultraschallsensor bereitgestellt sein.

Die Prüfsteuereinrichtung kann insbesondere durch eine anwendungsspezifische integrierte Schaltung (ASIC), einen Mikroprozessor, ein elektronisches Steuergerät (ECU) oder dergleichen ausgebildet sein.

Das Erfassen der Kenngröße an den mehreren Messpunkten unter Variieren der Frequenz und der Amplitude des Prüfsignals durch die Prüfsteuereinrichtung kann auch als "Prüfbetrieb" des Ultraschallsensors bezeichnet werden. Ein Ansteuern der elektroakustischen Wandleranordnung zum Erzeugen von Ultraschallwellen und ein zeitlich darauffolgendes Erfassen reflektierter Ultraschallwellen zum Zwecke der Distanzmessung kann auch als "Messbetrieb" des Ultraschallsensors bezeichnet werden.

Gemäß einer Ausführungsform ist das elektrische Prüfsignal ein stromkonstantes Signal und die jeweilige Kenngröße umfasst eine Amplitude und/oder eine Phasenlage der Spannung des Antwortsignals bei der Frequenz und Amplitude des elektrischen Prüfsignals an dem jeweiligen Messpunkt.

Es können somit an jedem Messpunkt eine oder auch mehrere Kenngrößen erfasst werden. Vorzugsweise wird mindestens die Amplitude der Spannung des Antwortsignals erfasst. Besonders vorzugsweise wird darüber hinaus auch die Phasenlage der Spannung des Antwortsignals erfasst. Somit können vorteilhafterweise die real- und die komplexwertigen Anteile der Antwort der elektroakustischen Wandleranordnung vollständig erfasst werden.

Durch Wahl eines stromkonstanten Signals (Signals mit konstanter Stromamplitude) kann vorteilhaft der Prüfbetrieb des Ultraschallsensors unter den gleichen Bedingungen wie ein stromgesteuerter Messbetrieb des Ultraschallsensors erfolgen.

Jedoch ist alternativ hierzu auch angedacht, dass das elektrische Prüfsignal ein spannungskonstantes Signal sein kann und die jeweilige Kenngröße dementsprechend eine Amplitude und/oder eine Phasenlage der Stromstärke des Antwortsignals bei der Frequenz und Amplitude des elektrischen Prüfsignals an dem jeweiligen Messpunkt sein kann.

Gemäß einer weiteren Ausführungsform sind die mehreren Messpunkte des Prüfsignals entsprechend Arbeitspunkten eines Ansteuersignals für den Ultraschallsensor während des Durchführens einer Distanzmessung gewählt.

Das heißt, der Prüfbetrieb des Ultraschallsensors kann mit denselben Frequenzen und Amplituden des Prüfsignals durchgeführt werden, die auch beim Messbetrieb des Ultraschallsensors für das Ansteuersignal benutzt werden.

Auf diese Weise kann das im Prüfbetrieb erfasste Kennfeld (die an den mehreren Messorten erfassten Kenngrößen) vorteilhafterweise die resistiven, induktiven und kapazitiven Eigenschaften der elektroakustischen Wandleranordnung bei den Amplituden und Frequenzen charakterisieren, die für den Messbetrieb relevant sind. Die so gewonnene Charakterisierung können vorteilhaft verwendet werden, um Parameter des Messbetriebs anzupassen und so eine fortgesetzte Nutzung eines Ultraschallsensors mit im Laufe der Zeit verändertem Betriebsverhalten zu ermöglichen.

Erfindungsgemäß umfassen die mehreren Messpunkte für eine Anzahl unterschiedlicher Frequenzen innerhalb eines Frequenzbereichs jeweils genau einen Messpunkt. Hierbei ist die Amplitude des jeweiligen Messpunkts in Abhängigkeit von der Frequenz des Messpunkts gewählt.

Insbesondere können demgemäß die mehreren Messpunkte nicht das gesamte Kennfeld abdecken, sondern vorteilhafterweise entlang eines, insbesondere nicht geradlinigen, insbesondere nichtlinearen, eindimensionalen Pfades durch das Kennfeld des Ultraschallsensors gewählt sein.

Zwar wäre es theoretisch denkbar, im Prüfbetrieb einen vorgegebenen Frequenzbereich und einen vorgegebenen Amplitudenbereich vollständig durchzuprüfen und somit ein vollständiges Kennfeld des Ultraschallsensors zu ermitteln. Jedoch kann die Prüfung im Prüfbetrieb innerhalb kürzerer Zeit abgeschlossen werden, wenn für jede der Anzahl unterschiedlicher Frequenzen nur genau ein Messpunkt erfasst wird. Insbesondere kann der Prüfbetrieb somit in einer Pause zwischen zwei Messzyklen des Messbetriebs des Ultraschallsensors erfolgen, ohne dass der Messbetrieb des Ultraschallsensors für die Prüfung unterbrochen werden muss. Es kann also eine "Online-Prüfung" ermöglicht werden.

Die Amplitude des jeweiligen Messpunkts kann dabei vorzugsweise zu derjenigen Amplitude gewählt werden, mit der im Messbetrieb bei derselben Frequenz ein Ansteuersignal an die elektroakustische Wandleranordnung angelegt wird. Somit können vorteilhafterweise nur die für den Messbetrieb relevanten Kenngrößen erfasst werden.

Der Frequenzbereich kann gemäß den Erfordernissen des Messbetriebs gewählt sein. Der Frequenzbereich kann insbesondere eine Frequenz von 50 kHz umfassen. Besonders bevorzugt kann der Frequenzbereich einen Bereich von 40 kHz bis 60 kHz und ganz besonders bevorzugt von 30 bis 70 kHz umfassen.

Gemäß einer weiteren Ausführungsform sind die mehreren Messpunkte innerhalb des Frequenzbereichs in einem ersten Frequenzabschnitt, in dem bei einer vorangegangenen Prüfung der elektroakustischen Wandleranordnung ein hoher Gradient der zu erfassenden Kenngröße ermittelt wurde, dichter beieinander gewählt sind als in einem Frequenzabschnitt, in dem ein im Vergleich zu dem hohen Gradienten niedrigerer Gradient ermittelt wurde.

Die "vorangegangene Prüfung" kann sich hierbei insbesondere auf ein tatsächlich erfolgtes Durchführen des Prüfbetriebs beziehen. Insbesondere kann sich die "vorangegangene Prüfung" auf das zuletzt erfolgte Durchführen des Prüfbetriebs beziehen. Somit kann derjenige Frequenzabschnitt, in dem die Messpunkte dichter beieinander gewählt sind, über die Lebensdauer des Ultraschallsensors adaptiv an die Bereiche des Kennfelds angepasst werden, in denen Nichtlinearitäten festgestellt wurden. Alternativ hierzu kann sich die "vorangegangene Prüfung" auf ein während der Herstellung des Ultraschallsensors erfolgtes Durchführen des Prüfbetriebs beziehen. Die "vorangegangene Prüfung" kann sich insbesondere aber auch auf eine theoretische Ermittlung des Kennfelds und somit auf ein Soll-Kennfeld beziehen, d. h., die Messpunkte könnten dort dicht beieinander gewählt sein, wo Nichtlinearitäten in der Antwort der elektroakustischen Wandleranordnung erwartet werden.

Demgemäß kann die Anzahl der durchzuführenden Messungen und damit die für den Prüfbetrieb erforderliche Zeitintervall vorteilhafterweise weiter reduziert werden und/oder eine Genauigkeit der Bestimmung des Kennfelds in einem interessierenden Bereich kann erhöht werden.

Erfindungsgemäß sind von den Amplituden von jeweils zwei Messpunkten an benachbarten Frequenzen innerhalb des Frequenzbereichs die eine Amplitude an einer unteren Grenze und die andere Amplitude an einer oberen Grenze eines in Abhängigkeit von den benachbarten Frequenzen gewählten Amplitudenbereichs gewählt.

Der Amplitudenbereich für die jeweilige Frequenz kann insbesondere beispielsweise dergestalt gewählt werden, dass er einen vorbestimmten Toleranzbereich um diejenige Amplitude herum abdeckt, mit der im Messbetrieb bei derselben Frequenz ein Ansteuersignal an die elektroakustische Wandleranordnung angelegt wird.

Insbesondere können demgemäß die mehreren Messpunkte vorteilhafterweise entlang zweier eindimensionaler Pfade durch das Kennfeld des Ultraschallsensors gewählt sein, die Grenzen eines zweidimensionalen Bandes innerhalb des Kennfelds beschreiben, wobei dennoch für jede Frequenz der Anzahl von Frequenzen nur eine Messung durchgeführt (nur eine Kenngröße erfasst) zu werden braucht.

Gemäß einer weiteren Ausführungsform ist die Prüfsteuereinrichtung dazu eingerichtet, in Abhängigkeit von den von der Prüfsteuereinrichtung erfassten mehreren Kenngrößen einen Zustand der elektroakustischen Wandleranordnung an eine Steuervorrichtung des Kraftfahrzeugs zu melden.

Insbesondere kann die Prüfsteuereinrichtung die erfassten mehreren Kenngrößen auswerten und abhängig von einem Ergebnis dieser Auswertung entweder einen Fehlerzustand oder beispielsweise einen "betriebsbereit"-Zustand an die Steuervorrichtung des Kraftfahrzeugs melden. Die Meldung an die Steuervorrichtung kann insbesondere auch nur dann erfolgen, wenn ein Fehlerzustand festgestellt wurde.

Beispielsweise kann die Prüfsteuereinrichtung die erfassten Kenngrößen, die eine Kennlinie oder ein mehrdimensionales Kennfeld beschreiben, mit einer Sollkennlinie bzw. einem Soll-kennfeld vergleichen und basierend auf dem Vergleichsergebnis den Fehlerzustand oder den "betriebsbereit"-Zustand bestimmen.

Demgemäß kann die Steuervorrichtung des Kraftfahrzeugs einen fehlerhaften Ultraschallsensor von der Umfeldvermessung ausschließen und/oder eine Fehlermeldung an eine Bedienperson oder eine Wartungsperson des Fahrzeugs ausgeben.

Gemäß einer weiteren Ausführungsform umfasst das Ultraschallsensorsystem ferner eine Messsteuereinrichtung, die dazu eingerichtet ist, die elektroakustische Wandleranordnung durch Anlegen eines elektrischen Ansteuersignals zum Aussenden einer Ultraschallwalle anzuregen und durch darauffolgendes Erfassen und Auswerten eines elektrischen Detektionssignals von der elektroakustischen Wandleranordnung eine Distanzmessung durchzuführen. Dabei ist die Messsteuereinrichtung dazu eingerichtet, die Distanzmessung in Abhängigkeit von den von der Prüfsteuereinrichtung erfassten mehreren Kenngrößen durchzuführen.

Die Messsteuereinrichtung kann in den Ultraschallsensor integriert sein oder extern zu dem Ultraschallsensor bereitgestellt sein.

Die Messsteuereinrichtung kann insbesondere durch eine anwendungsspezifische integrierte Schaltung (ASIC), einen Mikroprozessor, ein elektronisches Steuergerät (ECU) oder dergleichen ausgebildet sein.

Das elektrische Ansteuersignal kann insbesondere ein stromkonstantes Signal mit konstanter Frequenz sein. Denkbar und bevorzugt ist aber auch, dass ein Sweep über einen vordefinierten Frequenzbereich durchgeführt wird.

Unter einem "elektrischen Detektionssignal" ist insbesondere dasjenige Signal zu verstehen, das die elektroakustische Wandleranordnung an die Messsteuereinrichtung zurückliefert. Das elektrische Detektionssignal kann Echosignale (Echosignalimpuls) umfassen, wenn eine Ultraschallwelle auf die elektroakustische Wandleranordnung (eine Ultraschallmembran davon) eintrifft und von der elektroakustischen Wandleranordnung (einem Piezoelement oder dergleichen davon) in eine solche Echosignalimpulse umgewandelt wird.

Im Messbetrieb können die Echosignale in dem Detektionssignal ermittelt werden. Aufgrund von Laufzeitunterschieden zwischen dem Anlegen des elektrischen Ansteuersignals und dem Auftreten des Echosignals in dem Detektionssignal kann auf eine Distanz zu einem Hindernis im Kraftfahrzeugumfeld geschlossen werden.

Insbesondere kann in Abhängigkeit der von der Prüfsteuereinrichtung erfassten Kenngrößen Folgendes angepasst werden: das Ansteuersignal (eine Frequenz, ein Frequenzbereich und/oder eine Amplitude desselben) und/oder ein Schwellwert zum Ermitteln des Echosignals in dem Detektionssignal und/oder ein Verstärkungsfaktor, mit dem das Detektionssignal verstärkt wird, bevor das Echosignal darin ermittelt wird.

Wenn vorschlagsgemäß die elektrischen Kenngrößen (das elektrische Kennfeld der elektroakustischen Wandleranordnung) bekannt sind und beim Durchführen der Distanzmessungen berücksichtigt werden, kann vorteilhaft die Zuverlässigkeit und die Genauigkeit der Distanzmessung verbessert werden.

Gemäß einer weiteren Ausführungsform umfasst der Ultraschallsensor die Prüfsteuereinrichtung.

Vorzugsweise umfasst der Ultraschallsensor auch die Messsteuereinrichtung. Besonders bevorzugt können die Prüfsteuereinrichtung, und ggf. auch die Messsteuereinrichtung, als Abschnitte einer auf einer Leiterplatte in einem Gehäuse des Ultraschallsensors angeordneten applikationsspezifischen integrierten Schaltung (ASIC) ausgebildet sein.

Demgemäß kann vorteilhafterweise ein Ultraschallsensor mit verlängerter Lebensdauer und/oder verbesserter Konstanz der Messqualität über die Lebensdauer hinweg bereitgestellt werden.

Gemäß einem zweiten Aspekt wird ein Kraftfahrzeug mit mindestens einem Ultraschallsensorsystem wie vorstehend beschrieben vorgeschlagen.

Die für das Ultraschallsensorsystem des ersten Aspekts beschriebenen Merkmale, Vorteile und Ausführungsformen gelten entsprechend auch für das Kraftfahrzeug des zweiten Aspekts.

Das Kraftfahrzeug kann insbesondere ein Personenkraftfahrzeug oder ein Lastkraftfahrzeug sein. Das Kraftfahrzeug kann über ein Assistenzsystem, wie beispielsweise ein Fahrassistenzsystem oder ein Parkassistenzsystem, verfügen, das insbesondere zum teilautonomen oder vollautonomen Fahren des Fahrzeugs eingerichtet sein kann. Unter teilautonomem Fahren wird beispielsweise verstanden, dass das Assistenzsystem eine Lenkvorrichtung und/oder eine Fahrstufenautomatik steuert. Unter vollautonomem Fahren wird beispielsweise verstanden, dass das Assistenzsystem zusätzlich auch eine Antriebseinrichtung und eine Bremseinrichtung steuert. Das Assistenzsystem kann hardwaretechnisch und/oder softwaretechnisch implementiert sein. Bei einer hardwaretechnischen Implementierung kann das Assistenzsystem zum Beispiel als Computer oder als Mikroprozessor ausgebildet sein. Bei einer softwaretechnischen Implementierung kann das Assistenzsystem als Computerprogrammprodukt, als eine Funktion, als eine Routine, als Teil eines Programmcodes oder als ausführbares Objekt ausgebildet sein. Insbesondere kann das Assistenzsystem als Teil eines übergeordneten Steuerungssystems des Fahrzeugs, wie beispielsweise eine ECU (Engine Control Unit), ausgebildet sein. Das Assistenzsystem kann das vorgeschlagene Ultraschallsensorsystem zum Überwachen bzw. Vermessen eines Umfelds des Kraftfahrzeugs mittels Ultraschallmessungen nach dem Puls-Echo-Verfahren verwenden.

Gemäß einer Ausführungsform dieses Aspekts umfasst der jeweilige Ultraschallsensor jeweils eine Prüfsteuereinrichtung und eine Messsteuereinrichtung. Gemäß einer anderen Ausführungsform dieses Aspekts kann die vorschlagsgemäße Prüfsteuereinrichtung nur einmal zentral in einer Steuervorrichtung des Kraftfahrzeugs vorgesehen sein und den Prüfbetrieb jedes von mehreren der Ultraschallsensoren steuern.

Gemäß einem zweiten Aspekt wird ein Verfahren zum Betreiben eines Ultraschallsensorsystems für ein Kraftfahrzeug vorgeschlagen, das einen Ultraschallsensor mit einer elektroakustischen Wandleranordnung zum Erzeugen und Detektieren von Ultraschallwellen und einer elektrischen Prüfeinrichtung umfasst und weiterhin eine Prüfsteuereinrichtung umfasst. Das Verfahren umfasst die Schritte: Ausgeben eines elektrischen Prüfsignals an die elektroakustische Wandleranordnung mittels der Prüfeinrichtung; Erfassen eines elektrischen Antwortsignals der elektroakustischen Wandleranordnung mittels der Prüfeinrichtung; und Erfassen, unter Variieren einer Frequenz und einer Amplitude des elektrischen Prüfsignals, einer Kenngröße des elektrischen Antwortsignals an mehreren Messpunkten durch die Prüfsteuereinrichtung.

Die für das Ultraschallsensorsystem des ersten Aspekts beschriebenen Merkmale, Vorteile und Ausführungsformen gelten entsprechend auch für das Verfahren des dritten Aspekts.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsbeispielen unter Bezugnahme auf die beigefügten Figuren näher erläutert.
- Fig. 1: zeigt ein schematisches Diagramm eines Ultraschallsensorsystems gemäß einem ersten Ausführungsbeispiel;
- Fig. 2: zeigt ein schematisches Diagramm eines Ultraschallsensorsystems gemäß einem zweiten Ausführungsbeispiel;
- Fig. 3: zeigt ein schematisches Diagramm eines Fahrzeugs mit einer Anzahl Ultraschallsensorsysteme gemäß einem dritten Ausführungsbeispiel;
- Fig. 4: zeigt Schritte eines Verfahrens zum Durchführen eines Prüfbetriebs gemäß Ausführungsbeispielen;
- Fig. 5: zeigt eine dreidimensionale Auftragung eines beispielhaften Kennfelds eines Ultraschallsensors; und
- Fig. 6: zeigt eine zweidimensionale Auftragung eines weiteren beispielhaften Kennfelds eines Ultraschallsensors mit darin eingetragenen Messpunkten.

In den Figuren sind gleiche oder funktionsgleiche Elemente mit denselben Bezugszeichen versehen worden, sofern nichts anderes angegeben ist.

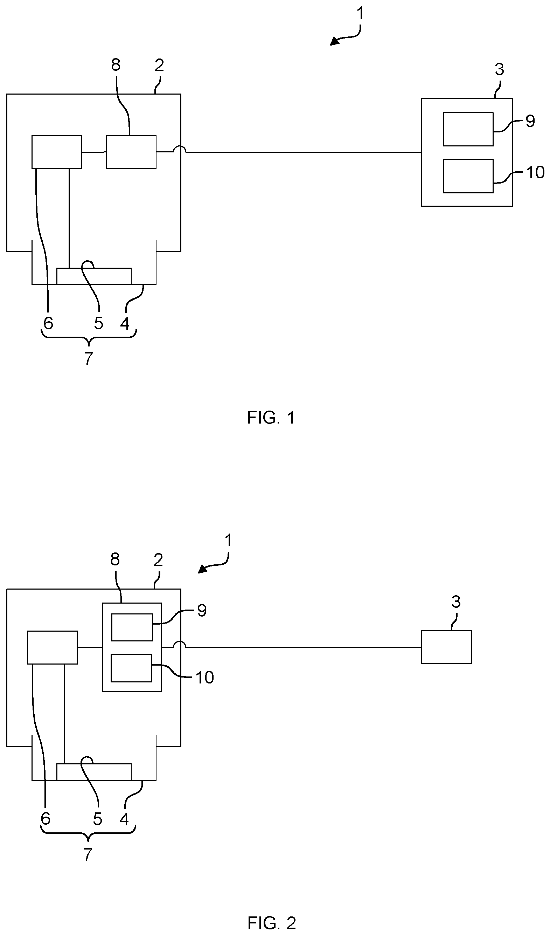

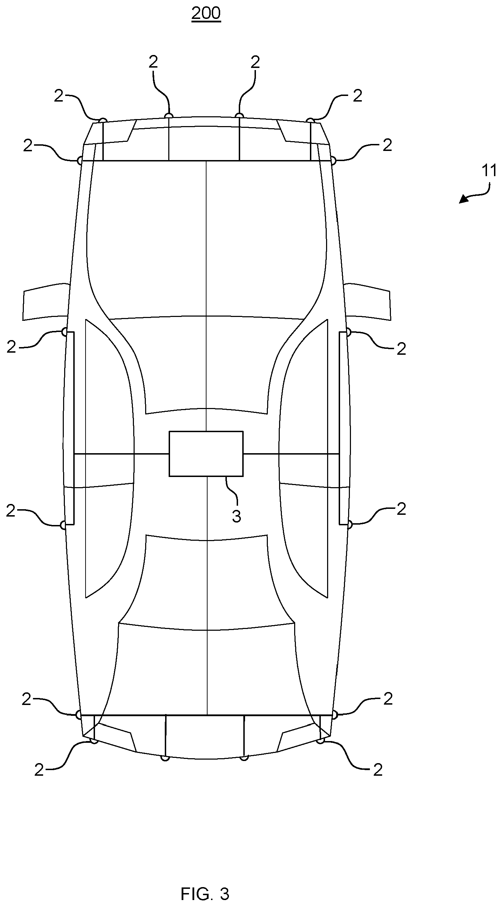

Fig. 1 zeigt ein schematisches Diagramm eines Ultraschallsensorsystems 1 gemäß einem ersten Ausführungsbeispiel. Das Ultraschallsensorsystem 1 ist aus einem Ultraschallsensor 2 und mindestens einem Abschnitt eines Steuergeräts 3 gebildet. Das Steuergerät 3 kann beispielsweise ein elektronisches Steuergerät (ECU) eines Kraftfahrzeugs (11 in Fig. 3; in Fig. 1 nicht gezeigt) sein.

In dem grundsätzlich rein funktional aufzufassenden Diagramm aus Fig. 1 ist eine Außenform eines Gehäuses des Ultraschallsensors 2 schematisch angedeutet. An einer in der Fig. 1 unteren Seite des Gehäuses des Ultraschallsensors 2 ist eine Ultraschallmembran 4, in Fig. 1 als Membrantopf angedeutet, angebracht. Auf einer Innenseite der Ultraschallmembran 4 ist ein Piezoelement 5 (Beispiel für ein Schallwandlerelement) angebracht, beispielsweise angeklebt. Das Piezoelement 5 ist elektrisch mit einer Koppelschaltung 6 verbunden. Die Koppelschaltung dient der Impedanzanpassung. Die Anordnung aus Ultraschallmembran 4, Piezoelement 5 und Koppelschaltung 6 ist ein Beispiel für eine elektroakustische Wandleranordnung 7.

Eine in dem Gehäuse des Ultraschallsensors 2 angeordnete Steuereinheit 8 ist dazu eingerichtet, analoge elektrische oszillierende Signale an die elektroakustische Wandleranordnung 7 anzulegen und von der elektroakustischen Wandleranordnung an die Steuereinheit 8 angelegte, analoge elektrische oszillierende Signale zu erfassen.

Das extern zu dem Ultraschallsensor 2 angeordnete Steuergerät 3 umfasst eine Messsteuereinrichtung 9 und eine Prüfsteuereinrichtung 10.

In einem Messbetrieb des Ultraschallsensors 2 tauscht die Messsteuereinrichtung 9 Steuersignale, vorzugsweise digitale Signale, mit der sensorinternen Steuereinheit 8 aus. Insbesondere kann die Messsteuereinrichtung 9 auf diese Weise veranlassen, dass die Steuereineheit 8 ein, insbesondere analoges, insbesondere oszillierendes, elektrisches Ansteuersignal an die elektroakustische Wandleranordnung 7 anlegt. Das Ansteuersignal regt vermittels des Piezoelements 5 die Ultraschallmembran 4 zu Schwingungen an, so dass eine Ultraschallwelle ausgesendet wird. Anschließend veranlasst die Messsteuereinrichtung 9 die Steuereinheit 8 dazu, über einen vorbestimmten Zeitraum ein von der elektroakustischen Wandleranordnung 7 geliefertes elektrisches Detektionssignal zu erfassen. Wenn eine aus einem Umfeld reflektierte Ultraschallwelle auf die Ultraschallmembran 4 eintrifft und diese in Schwingungen versetzt, erzeugt das Piezoelement 5 ein Echosignal (einen Echosignalimpuls) in dem elektrischen Detektionssignal. Das Detektionssignal wird von der sensorinternen Steuereinheit 8 erfasst und, vorzugsweise in digitaler Form, an die Messsteuereinrichtung 9 übermittelt. Die Messsteuereinrichtung 9 wertet das solchermaßen erfasste Detektionssignal aus, identifiziert das Echosignal, und ermittelt aus einer Zeitdifferenz zwischen dem Aussenden des Ultraschallsignals und dem Auftreten des Echosignals sowie der bekannten Schallgeschwindigkeit eine Entfernung zu einem Hindernis in einem Umfeld des Ultraschallsensors 2.

Die elektroakustische Wandleranordnung 7 kann als elektrische Anordnung mit resistiven, kapazitiven und induktiven Eigenschaften verstanden werden. Wenn sich diese Eigenschaften, insbesondere aufgrund von Alterungseffekten des Piezoelements 5 oder auch aufgrund von Verschmutzung und dergleichen verändern, kann es zu einer Fehlanpassung bei der Ansteuerung der elektroakustischen Wandleranordnung 7 und/oder der Erfassung der Detektionssignale von der elektroakustischen Wandleranordnung 7 kommen, die die Qualität der Messung beeinträchtigen können.

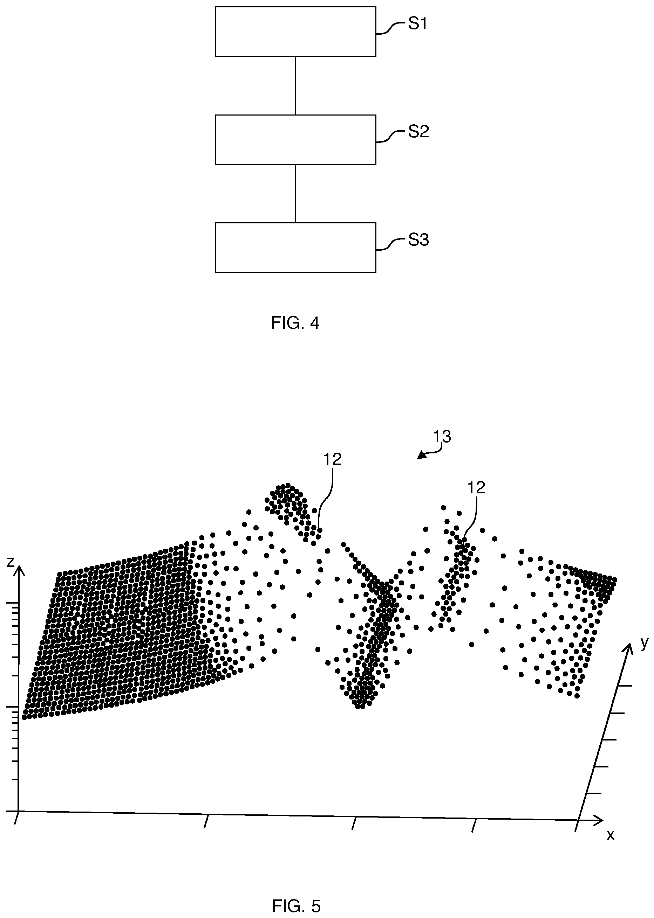

Daher führt in einem Prüfbetrieb des Ultraschallsensors 2 die Prüfsteuereinrichtung 10 des Steuergeräts 3 die in Fig. 4 schematisch veranschaulichten Schritte durch. Es wird auf Fig. 1 im Zusammenspiel mit Fig. 4 Bezug genommen.

In Schritt S1 tauscht die Messsteuereinrichtung 10 Steuersignale, vorzugsweise digitale Signale, mit der sensorinternen Steuereinheit 8 aus. Insbesondere kann die Prüfsteuereinrichtung 10 auf diese Weise veranlassen, dass von der sensorinternen Steuereinheit 8 (in diesem Falle ein Beispiel für eine "Prüfeinrichtung") ein, insbesondere analoges, insbesondere oszillierendes, elektrisches Prüfsignal an die elektroakustische Wandleranordnung 7 angelegt wird.

Während das Prüfsignal solchermaßen an die elektroakustische Wandleranordnung 7 angelegt ist, erfasst die Prüfsteuereinrichtung 9 in Schritt S2 ein von der sensorinternen Steuerschaltung 8 ("Prüfeinrichtung") übermitteltes, vorzugsweise digitales Signal, das indikativ für ein, vorzugsweise analoges, vorzugsweise oszillierendes, elektrisches Antwortsignal der elektroakustischen Wandleranordnung 7 auf das Anlegen des Prüfsignals ist.

In Schritt S3 erfasst die Prüfsteuereinrichtung 10 eine Kenngröße des elektrischen Antwortsignals.

Das Prüfsignal kann hierbei ein stromkonstantes Signal (ein Wechselstromsignal mit konstanter Stromamplitude) sein und das elektrische Antwortsignal kann dementsprechend ein sich bei Anlegen des Prüfsignals an der elektroakustischen Wandleranordnung 7 einstellendes Spannungssignal sein. Die erfasste Kenngröße ist in diesem Fall eine Spannungsamplitude und optional eine Phasenlage des elektrischen Antwortsignals.

Das Prüfsignal kann aber auch ein spannungskonstantes Signal sein und das elektrische Antwortsignal dementsprechend ein Stromsignal. Die erfasste Kenngröße kann in diesem Fall eine Stromamplitude und optional eine Phasenlage des elektrischen Antwortsignals umfassen.

Vorschlagsgemäß werden dabei eine Frequenz und eine Amplitude des Prüfsignals variiert. Das heißt, es werden mehrere Messpunkte bei mehreren unterschiedlichen Frequenzen und unterschiedlichen Amplituden durchlaufen, und an jedem der Messpunkte wird eine entsprechende Kenngröße erfasst.

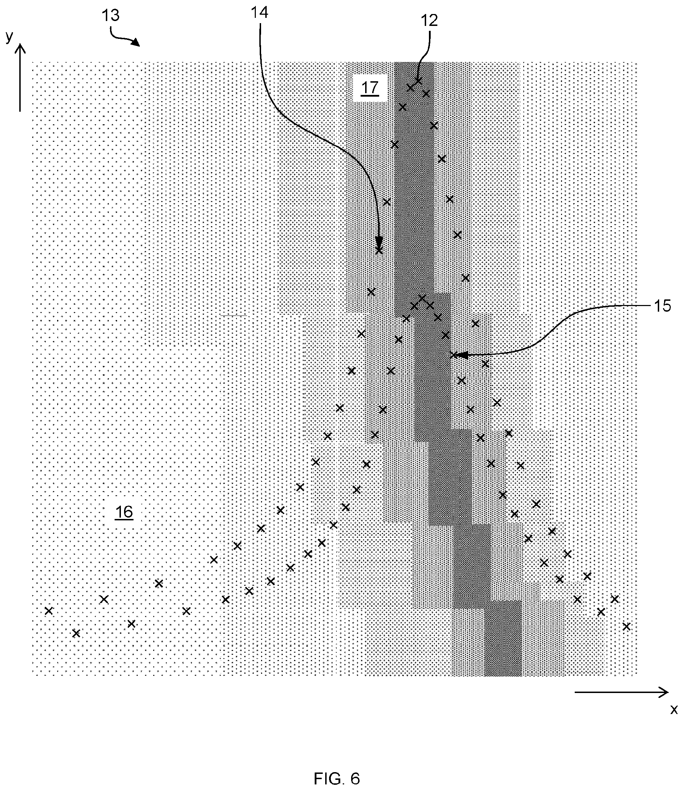

Die Vorteile und Details des Variierens von Frequenz und Amplitude werden nachstehend anhand der Fig. 5 und 6 näher erläutert werden; zunächst werden strukturelle Alternativen zu der Anordnung aus Fig. 1 beschrieben.

Fig. 2 zeigt ein schematisches Diagramm eines Ultraschallsensorsystems 1 gemäß einem zweiten Ausführungsbeispiel. Im zweiten Ausführungsbeispiel ist die Funktionalität der Messsteuereinrichtung 9 und die Funktionalität der Prüfsteuereinrichtung 10 wie auch die Funktionalität der elektroakustischen Wandleranordnung 7 (Koppelschaltung 6, Ultraschallmembran 4 und Piezoelement 5) die gleiche wie im ersten Ausführungsbeispiel, die Messsteuereinrichtung 9 und die Prüfsteuereinrichtung 10 sind jedoch als Abschnitte der sensorinternen Steuereinheit 8 ausgebildet, und nicht als Abschnitte des externen Steuergeräts 3.

Das externe Steuergerät 3 bildet demgemäß im zweiten Ausführungsbeispiel keinen Teil des vorschlagsgemäßen Ultraschallsystems 1 aus, vielmehr ist das Ultraschallsystem 1 im zweiten Ausführungsbeispiel vollständig durch den Ultraschallsensor 2 realisiert.

Demgemäß entfällt die Notwendigkeit des Austauschs digitaler Steuersignale mit dem Steuergerät 3 zum Durchführen des Messbetriebs und des Prüfbetriebs. An das Steuergerät 3 können demgemäß lediglich Messergebnisse der Distanzmessung und/oder eine aus den erfassten Kenngrößen ermittelte Statusinformation über den Ultraschallsensors 2 übermittelt werden; im Übrigen können die erfassten Kenngrößen sensorintern zum Verbessern des Ansteuerns der elektroakustischen Wandleranordnung 7 im Messbetrieb benutzt werden.

Die sensorinterne Steuereinheit 8 kann insbesondere eine in dem Gehäuse des Ultraschallsensors 2 auf einer nicht gezeigten Leiterplatte angeordnete applikationsspezifische integrierte Schaltung (ASIC) sein.

Fig. 3 zeigt ein schematisches Diagramm eines Fahrzeugs 11 mit einer Anzahl Ultraschallsensoren 2 und einem Steuergerät 3 gemäß einem dritten Ausführungsbeispiel. Die Ultraschallsensoren 2 sind entlang einer linken Seite, einer rechten Seite und ferner entlang eines Frontstoßfängers und entlang eines Heckstoßfängers des Fahrzeugs 11 angeordnet.

Das dritte Ausführungsbeispiel ist sowohl mit dem ersten als auch mit dem zweiten Ausführungsbeispiel kombinierbar. Das heißt, gemäß einer Variante kann jeder der in Fig. 3 gezeigten Ultraschallsensoren 2 eine integrierte Prüfsteuereinrichtung 10 (Fig. 2) aufweisen und somit ein Ultraschallsensorsystem 1 (Fig. 2) darstellen. Das gezeigte Fahrzeug 11 kann demgemäß beispielsweise zwölf unabhängige Ultraschallsensorsysteme 1 (Fig. 2) aufweisen. Das Steuergerät 3 kann die Ultraschallsensorsysteme 1 (Fig. 2) zur Vermessung eines Fahrzeugumfelds nutzen und die gewonnenen Informationen dazu verwenden, eine Fahr- oder Parkassistenzfunktionalität bereitzustellen.

Gemäß einer anderen Variante kann eine vorschlagsgemäße Prüfsteuereinrichtung 10 (Fig. 1) und optional auch eine Messsteuereinrichtung 9 (Fig. 1) in dem Steuergerät 3 des Fahrzeugs 11 bereitgestellt sein. Somit können die mehreren Ultraschallsensoren 2 und das Steuergerät 3 gemeinsam ein Ultraschallsensorsystem 1 (Fig. 1) mit mehreren Ultraschallsensoren 2 ausbilden. In diesem Fall braucht die Funktionalität der Prüfsteuereinrichtung 10 (Fig. 1) des Steuergeräts 3 nur einmal ausgebildet zu werden und die Prüfsteuereinrichtung 10 (Fig. 1) kann zentral alle erfassten Kenngrößen der elektroakustischen Wandleranordnungen 7 (Fig. 1) der Ultraschallsensoren 2 auswerten und bei der Steuerung des Messbetriebs berücksichtigen.

Fig. 5 zeigt eine dreidimensionale Auftragung eines beispielhaften Kennfelds eines Ultraschallsensors. Es wird auf Fig. 5 und, wo erforderlich, auch auf Fig. 1 und 2 Bezug genommen.

Das Kennfeld 13 in Fig. 5 ist aus (aufgrund ihrer Vielzahl nicht einzeln bezeichneten) Messpunkten zusammengesetzt, die mit einem Ultraschallsensorsystem 1 in einem sehr umfassenden Prüfbetrieb erfasst wurden. Entlang einer mit "x" bezeichneten Achse ist dabei die Frequenz eines stromkonstanten Prüfsignals, entlang einer mit "y" bezeichneten Achse die Amplitude der Stromstärke des stromkonstanten Prüfsignals, und entlang einer mit "z" bezeichneten Achse ist die Amplitude der Spannung des erfassten Antwortsignals aufgetragen.

In dem Kennfeld 13 in Fig. 5 sind zwei Peaks 12 des Kennfelds 13 zu erkennen, bei denen die Amplitude des Kennfelds stark ansteigt. Ferner ist zu erkennen, dass die Peaks 12 eine ausgeprägte Amplitudenabhängigkeit zeigen - ihre Frequenzlage verschiebt sich mit zunehmender Amplitude hin zu niedrigeren Frequenzen. Diese Nichtlinearitäten ergeben sich aufgrund eines Domäneneffekts, der dem Piezoelement 5 immanent ist.

Ein zentraler Gedanke der vorgeschlagenen Lösung ist es nun, dass eine bessere Erfassung der elektrischen Kenngrößen eines Ultraschallsensors 2 gelingen kann, wenn diese nicht nur bei unterschiedlichen Frequenzen, sondern auch bei unterschiedlichen, und insbesondere bei den für den Messbetrieb des Ultraschallsensors tatsächlich relevanten, Amplituden erfolgt.

Allerdings erfordert das Erfassen des gesamten in Fig. 5 gezeigten Kennfelds 13 ein Variieren sowohl der Frequenzen als auch der Amplituden des Prüfsignals jeweils über ihren gesamten Wertebereich in allen möglichen Kombinationen und demgemäß eine große Menge an Messungen und dementsprechend viel Zeit und Energie. Wünschenswert ist allerdings, den Prüfbetrieb "online", das heißt ohne bzw. ohne nennenswerte Unterbrechung des Messbetriebs durchzuführen.

Anhand von Fig. 6 - weiterhin unter Rückbezug auch auf die Fig. 1 und 2 - wird daher ein bevorzugter Modus des Erfassens der elektrischen Kenngrößen der elektroakustischen Wandleranordnung 7 erläutert, der in Ausführungsbeispielen von der Prüfsteuereinrichtung 10 (Fig. 1, 2) implementiert werden kann.

Fig. 6 zeigt eine zweidimensionale Auftragung eines weiteren beispielhaften Kennfelds 13 eines Ultraschallsensors 2. In Fig. 6 ist entlang der "x"-Achse die Frequenz des Prüfsignals und entlang der "y"-Achse die Amplitude des Prüfsignals aufgetragen, wie in Fig. 5. Die Amplitude des Antwortsignals ist in Fig. 6 durch eine Schattierung dargestellt, wobei die Amplitude des Antwortsignals umso höher ist, je dunkler die Schattierung ist. Insbesondere ist in Fig. 6 durch Schattierung ein theoretisches und/oder ein in umfangreichen Experimenten ähnlich wie in Fig. 5 ermitteltes vollständiges Kennfeld 13 der elektroakustischen Wandleranordnung dargestellt.

Es sei angemerkt, dass im Messbetrieb ein Sweep über einen definierten Frequenzbereich erfolgen kann, der Messbetrieb also nicht notwendigerweise bei genau einer Frequenz und genau einer Amplitude erfolgt, sondern vorteilhaft entlang einer (nicht gezeigten) Arbeitskurve in dem Kennfeld 13 aus Fig. 6 erfolgen kann.

In Fig. 6 sind ferner Messpunkte 14, 15 des Kennfelds gezeigt, die von der Prüfsteuereinrichtung 10 gemäß Ausführungsbeispiel tatsächlich während des Prüfbetriebs erfasst werden.

Das heißt, während des Prüfbetriebs variiert die Prüfsteuereinrichtung 10 die Frequenz des Prüfsignals derart, dass nacheinander eine Anzahl einzelner Frequenzstützpunkte bei den Frequenzen der in Fig. 6 gezeigten Messpunkte 14, 15 durchlaufen werden. Dabei wird für jede Frequenz erfindungsgemäß genau ein Messpunkt erfasst, und für jeden solchen Messpunkt wird eine von der Frequenz abhängige Amplitude gewählt. Die Amplitude wird dabei dergestalt gewählt (variiert), dass die jeweilige Amplitude in einem Bezug zu einer Amplitude des Ansteuersignals bei der jeweiligen Frequenz während des Frequenz-Sweeps des Messbetriebs steht. Gemäß einem Ausführungsbeispiel werden nur die mit 14 oder nur die mit 15 bezeichneten Messpunkte erfasst und entsprechen im wesentlichen Punkten auf einer Arbeitskurve des Ansteuersignals im Messbetrieb.

Gemäß einem besonders bevorzugten Ausführungsbeispiel werden jedoch sowohl die mit 14 als auch die mit 15 bezeichneten Messpunkte erfasst, und eine Arbeitskurve der Amplituden des Ansteuersignal kann zwischen den durch die Messpunkte 14 und 15 definierten Pfaden durch das Kennfeld verlaufen. Das heißt, die Messpunkte 14, 15 sind erfindungsgemäß derart gewählt, dass bei je zwei benachbarten Messpunkten 14, 15 ein Messpunkt 15 an einer unteren Grenze eines Amplitudenbereichs und ein zweiter Messpunkt 16 an einer oberen Grenze eines Amplitudenbereichs gewählt ist, wobei der Amplitudenbereich um eine Amplitude des Ansteuersignals im Messbetrieb beispielsweise bei einer der Frequenzen oder bei einer Mitte zwischen den beiden Frequenzen zentriert ist. Auf diese Weise ergeben sich mit nur einem Frequenz-Sweep des Prüfsignals in Fig. 6 ein erster Pfad 14 und ein zweiter Pfad 15 durch das Kennfeld, die zusammen ein zweidimensionales Band durch das Kennfeld begrenzen. Es kann somit eine besonders realistische Einschätzung oberer und unterer Grenzen der für den Messbetrieb relevanten elektrischen Kenngrößen gewonnen werden.

Zudem ist in Fig. 6 ein besonders bevorzugtes Ausführungsbeispiel veranschaulicht, bei dem die Messpunkte in einem ersten Frequenzbereich 16, in dem ein Gradient der Amplitude des Antwortsignals gering ist, weiter voneinander entfernt gewählt als die Messpunkte 14, 15 in einem zweiten Frequenzbereich 17 in der Nähe des Peaks 12, bei dem ein Gradient der Amplitude des Antwortsignals hoch ist. Demgemäß lässt sich die Anzahl der zu erfassenden Punkte im Prüfbetrieb insbesondere im Bereich 16 weiter reduzieren.

Gemäß der vorstehend beschriebenen Maßnahmen kann es somit vorteilhafterweise möglich sein, mit nur wenigen Einzelmessungen an den speziell frequenzabhängig gewählten Messpunkten 14 und 15 eine realistische Einschätzung der Eigenschaften des zweidimensionalen Kennfelds der Amplituden des Antwortsignals in einem für den Messtrieb relevanten Bereich zu gewinnen. Dadurch ist eine schnelle Erfassung des Kennfelds bzw. der Kenngrößen an den Messpunkten 14, 15 möglich, die beispielsweise zwischen zwei Messzyklen des Messbetriebs durchgeführt werden kann, ohne den Messbetrieb unterbrechen zu müssen.

Es sind verschiedene Wege angedacht, wie die solchermaßen erfassten Kenngrößen (Amplitude und ggf. Phasenlagen des elektrischen Antwortsignals, die sich bei Anlegen des elektrischen Prüfsignals an den Messpunkten 14, 15 einstellen) von der Prüfsteuereinrichtung 10 ausgewertet werden können.

Beispielsweise kann sich im Laufe der Betriebszeit des Ultraschallsensors 12 eine Höhe der Peaks 12 (Fig. 5, Fig. 6), eine Frequenzlage der Peaks 12 (Fig. 5, Fig. 6) oder das Verhältnis der Peakhöhen zueinander verändern. Die genannten Parameter der Peaks 12 sind auch mit einer einfachen Prüfungssteuereinrichtung 10, wie sie durch eine applikationsspezifische Schaltung (ASIC) 8 (Fig. 2) oder ein Kraftfahrzeug-Steuergerät (ECU) 3 (Fig. 1) implementiert sein kann, einfach zu ermitteln. Die Prüfungssteuereinrichtung 10 kann einen Grad der Veränderung der Peakhöhen oder -lagen gegenüber einem Referenzzustand ermitteln und anhand dessen einen Zustand des Ultraschallsensors 10 beurteilen. Wird der Zustand des Ultraschallsensors 2 als fehlerhaft beurteilt, kann der Ultraschallsensor 2, etwa in dem in Fig. 3 gezeigten Ausführungsbeispiel, von der Umfeldvermessung durch das Steuergerät 3 ausgeschlossen (nicht länger berücksichtigt) werden. Das Steuergerät 3 kann an einen Fahrer oder eine Wartungsperson eine entsprechende Warnmeldung ausgeben.

Denkbar ist jedoch auch, dass anhand der ermittelten veränderten Peaklagen kein fehlerhafter Zustand erkannt wird, sondern der Messbetrieb (die Distanzmessung) angepasst wird.

So ist es denkbar, dass die Prüfsteuereinrichtung 10 der Messsteuereinrichtung 9 eine Auswertung der erfassten Kenngrößen (beispielsweise Informationen über verschobene Lagen und/oder Höhen der Peaks 12) bereitstellt und die Messsteuereinrichtung 9 in Abhängigkeit davon beispielsweise die Steuereinheit 8 des Ultraschallsensors 2 dazu veranlasst, eine Amplitude des Ansteuersignals im Messbetrieb zu erhöhen, eine Frequenzlage oder einen Frequenzbereich eines Sweeps des Ansteuersignals im Messbetrieb anzupassen, eine Verstärkung des Detektionssignals im Messbetrieb durchzuführen oder einen Schwellparameter für die Erfassung von Echosignalen im Detektionssignal anzupassen. Demgemäß kann die Messsteuereinrichtung 9 die Distanzmessung in Abhängigkeit der von der Prüfsteuereinrichtung 10 erfassten mehreren Kenngrößen durchführen. Somit kann vorteilhafterweise eine hohe Qualität der Messung über längere Betriebsdauern hinweg aufrechterhalten werden, auch wenn sich elektrische Eigenschaften, wie resistive, induktive und/oder kapazitvie Eigenschaften der elektroakustischen Wandleranordnung 7 im Laufe der Zeit verändern.

Auch ist denkbar, dass die Prüfsteuereinrichtung 10 neben der Amplitude des Antwortsignals als weitere Kenngröße auch eine Phasenlage des Antwortsignals relativ zu einer Phasenlage des Prüfsignals als weitere Kenngröße erfasst und in die Beurteilung des Zustands des Ultraschallsensors 2 und/oder in die Anpassung des Messbetriebs der Messsteuereinrichtung 9 mit einfließen lässt. Insbesondere lassen sich anhand der Phasenlage die induktiven und kapazitiven Eigenschaften der elektrischen Wandleranordnung 7 erfassen und bewerten. Die solchermaßen gewonnenen Informationen können beispielsweise auch benutzt werden, um Parameter eines von der Koppelschaltung 6 umfassten Schwingkreises anzupassen und so eine Impedanzanpassung an die Impedanz der elektrischen Wandleranordnung 7 bei den relevanten Frequenzen und Amplituden des Ansteuersignals zu verbessern.

Dabei erfolgen die vorstehend beschriebenen Maßnahmen zur Meldung eines Fehlerzustandes Ultraschallsensors 2 und/oder zur Anpassung des Messtriebs vorteilhafterweise anhand von Kenngrößen, die bei Amplituden des Prüfsignals erfasst wurden, die den Amplituden des Ansteuersignals bei den jeweils relevanten Frequenzen im Messbetrieb entsprechen bzw. in Beziehung zu diesen Amplituden stehen und daher eine höhere Relevanz bzw. Güte aufweisen können als Kenngrößen, die bei niedrigen bzw. anderen oder konstanten Amplituden des Prüfsignals erfasst werden.

Obwohl die vorliegende Erfindung anhand von Ausführungsbeispielen beschrieben wurde, ist sie vielfältig modifizierbar.

In den Ausführungsbeispielen wurde ein Piezoelement 5 beschrieben; die elektroakustische Wandleranordnung 7 kann jedoch auch einen anderen Schallwandler auf mechanischkapazitivem, mechanisch-resistivem, magnetostriktivem oder elektrostriktivem Arbeitsprinzip umfassen.

### BEZUGSZEICHENLISTE

- 1: Ultraschallsensorsystem
- 2: Ultraschallsensor
- 3: Steuergerät
- 4: Ultraschallmembran
- 5: Piezoelement (Schallwanderelement)
- 6: Koppelschaltung
- 7: elektroakustische Wandleranordnung
- 8: sensorinterne Steuereinheit (Prüfeinrichtung)
- 9: Messsteuereinrichtung
- 10: Prüfsteuereinrichtung
- 11: Kraftfahrzeug
- 12: Peak
- 13: Kennfeld
- 14: Messpunkte, erster Pfad
- 15: Messpunkte, zweiter Pfad
- 16: Frequenzbereich mit niedrigem Gradienten
- 17: Frequenzbereich mit hohem Gradienten
- x, y, z: Achsen einer Auftragung
- S1-S3: Verfahrensschritte

## Patentansprüche

1. Ultraschallsensorsystem (1) für ein Kraftfahrzeug (11), umfassend:
einen Ultraschallsensor (2) mit einer elektroakustischen Wandleranordnung (7) zum Erzeugen und Detektieren von Ultraschallwellen und einer elektrischen Prüfeinrichtung (8), die dazu eingerichtet ist, ein elektrisches Prüfsignal an die elektroakustische Wandleranordnung (7) auszugeben und ein elektrisches Antwortsignal der elektroakustischen Wandleranordnung (7) auf das elektrische Prüfsignal zu erfassen, und
eine Prüfsteuereinrichtung, (10) die dazu eingerichtet ist, mittels der elektrischen Prüfeinrichtung (8) unter Variieren einer Frequenz und einer Amplitude des elektrischen Prüfsignals an mehreren Messpunkten (14, 15) eine Kenngröße des elektrischen Antwortsignals zu erfassen
wobei die mehreren Messpunkte (14, 15) für eine Anzahl unterschiedlicher Frequenzen innerhalb eines Frequenzbereichs jeweils genau einen Messpunkt (14, 15) umfassen,
wobei die Amplitude des jeweiligen Messpunkts (14, 15) in Abhängigkeit von der Frequenz des Messpunkts (14, 15) gewählt ist
**dadurch gekennzeichnet ist, dass**
von den Amplituden von jeweils zwei Messpunkten (14, 15) an benachbarten Frequenzen innerhalb des Frequenzbereichs die eine Amplitude an einer unteren Grenze und die andere Amplitude an einer oberen Grenze eines in Abhängigkeit von den benachbarten Frequenzen gewählten Amplitudenbereichs gewählt sind.

2. Ultraschallsensorsystem nach Anspruch 1,
wobei das elektrische Prüfsignal ein stromkonstantes Signal ist und die jeweilige Kenngröße eine Amplitude und/oder eine Phasenlage der Spannung des Antwortsignals bei der Frequenz und Amplitude des elektrischen Prüfsignals an dem jeweiligen Messpunkt (14, 15) umfasst.

3. Ultraschallsensorsystem nach einem der vorhergehenden Ansprüche,
wobei die mehreren Messpunkte (14, 15) des Prüfsignals entsprechend Arbeitspunkten eines Ansteuersignals für den Ultraschallsensor (2) während des Durchführens einer Distanzmessung gewählt sind.

4. Ultraschallsensorsystem nach Anspruch 1,
wobei die mehreren Messpunkte (14, 15) innerhalb des Frequenzbereichs in einem ersten Frequenzabschnitt (17), in dem bei einer vorangegangenen Prüfung der elektroakustischen Wandleranordnung ein hoher Gradient der zu erfassenden Kenngröße ermittelt wurde, dichter beieinander gewählt sind als in einem Frequenzabschnitt (16), in dem ein im Vergleich zu dem hohen Gradienten niedrigerer Gradient ermittelt wurde.

5. Ultraschallsensorsystem nach einem der Ansprüche 1 bis 4,
wobei die Prüfsteuereinrichtung (10) dazu eingerichtet ist, in Abhängigkeit von den von der Prüfsteuereinrichtung (10) erfassten mehreren Kenngrößen einen Zustand der elektroakustischen Wandleranordnung (7) an eine Steuervorrichtung (3) des Kraftfahrzeugs (11) zu melden.

6. Ultraschallsensorsystem nach einem der Ansprüche 1 bis 5,
ferner umfassend eine Messsteuereinrichtung (9), die dazu eingerichtet ist, die elektroakustische Wandleranordnung (7) durch Anlegen eines elektrischen Ansteuersignals zum Aussenden einer Ultraschallwalle anzuregen und durch darauffolgendes Erfassen und Auswerten eines elektrischen Detektionssignals von der elektroakustischen Wandleranordnung (7) eine Distanzmessung durchzuführen,
wobei die Messsteuereinrichtung (9) dazu eingerichtet ist, die Distanzmessung in Abhängigkeit von den von der Prüfsteuereinrichtung (10) erfassten mehreren Kenngrößen durchzuführen.

7. Ultraschallsensorsystem nach einem der Ansprüche 1 bis 6,
wobei der Ultraschallsensor (2) die Prüfsteuereinrichtung (10) umfasst.

8. Kraftfahrzeug (11) mit mindestens einem Ultraschallsensorsystem (1) nach einem der Ansprüche 1 bis 7.

9. Verfahren zum Betreiben eines Ultraschallsensorsystems (1) für ein Kraftfahrzeug (11), das einen Ultraschallsensor (2) mit einer elektroakustischen Wandleranordnung (7) zum Erzeugen und Detektieren von Ultraschallwellen und einer elektrischen Prüfeinrichtung (8) umfasst und weiterhin eine Prüfsteuereinrichtung (10) umfasst, wobei das Verfahren die Schritte umfasst:
Ausgeben (S1) eines elektrischen Prüfsignals an die elektroakustische Wandleranordnung (7) mittels der Prüfeinrichtung (8);
Erfassen (S2) eines elektrischen Antwortsignals der elektroakustischen Wandleranordnung (7) mittels der Prüfeinrichtung (8); und
Erfassen (S3), unter Variieren einer Frequenz und einer Amplitude des elektrischen Prüfsignals, einer Kenngröße des elektrischen Antwortsignals an mehreren Messpunkten (14, 15) durch die Prüfsteuereinrichtung (10),
wobei die mehreren Messpunkte für eine Anzahl unterschiedlicher Frequenzen innerhalb eines Frequenzbereichs jeweils genau einen Messpunkt umfassen, wobei die Amplitude des jeweiligen Messpunkts in Abhängigkeit von der Frequenz des Messpunkts gewählt ist,
**dadurch gekennzeichnet, dass** von den Amplituden von jeweils zwei Messpunkten an benachbarten Frequenzen innerhalb des Frequenzbereichs die eine Amplitude an einer unteren Grenze und die andere Amplitude an einer oberen Grenze eines in Abhängigkeit von den benachbarten Frequenzen gewählten Amplitudenbereichs gewählt sind.

## Claims

1. Ultrasonic sensor system (1) for a vehicle (11), comprising:
an ultrasonic sensor (2) with an electro-acoustic transducer arrangement (7) for generating and detecting ultrasonic waves and an electrical testing device (8) configured to output an electrical test signal to the electro-acoustic transducer arrangement (7) and to detect an electrical response signal from the electro-acoustic transducer arrangement (7) to the electrical test signal, and
a test control device (10) configured to detect a characteristic parameter of the electrical response signal by means of the electrical testing device (8) at multiple measurement points (14, 15) by varying a frequency and an amplitude of the electrical test signal,
wherein the multiple measurement points (14, 15) each comprise exactly one measurement point (14, 15) for a number of different frequencies within a frequency range,
wherein the amplitude of the respective measurement point (14, 15) is selected as a function of the frequency of the measurement point (14, 15),
**characterized in that**,
of the amplitudes of any two measurement points (14, 15) at adjacent frequencies within the frequency range, one amplitude is selected at a lower limit and the other amplitude is selected at an upper limit of an amplitude range chosen as a function of the adjacent frequencies.

2. The ultrasonic sensor system according to claim 1,
wherein the electrical test signal is a constant-current signal, and the respective characteristic parameter comprises an amplitude and/or a phase position of the voltage of the response signal at the frequency and amplitude of the electrical test signal at the respective measurement point (14, 15).

3. The ultrasonic sensor system according to any one of the preceding claims, wherein the multiple measurement points (14, 15) of the test signal are selected to correspond to operating points of a drive signal for the ultrasonic sensor (2) during the performance of a distance measurement.

4. The ultrasonic sensor system according to claim 1,
wherein the multiple measurement points (14, 15) within the frequency range are selected to be closer together in a first frequency section (17), in which a high gradient of the characteristic parameter to be detected was determined during a previous test of the electro-acoustic transducer arrangement, than in a frequency section (16), in which a gradient lower than the high gradient was determined.

5. The ultrasonic sensor system according to any one of claims 1 to 4,
wherein the test control device (10) is configured to report a state of the electro-acoustic transducer arrangement (7) to a control device (3) of the motor vehicle (11) as a function of the multiple characteristic parameters detected by the test control device (10).

6. The ultrasonic sensor system according to any one of claims 1 to 5,
further comprising a measurement control device (9) configured to excite the electro-acoustic transducer arrangement (7) to emit an ultrasonic wave by applying an electrical drive signal and to perform a distance measurement by subsequently detecting and evaluating an electrical detection signal from the electro-acoustic transducer arrangement (7),
wherein the measurement control device (9) is configured to perform the distance measurement as a function of the multiple characteristic parameters detected by the test control device (10).

7. The ultrasonic sensor system according to any one of claims 1 to 6, wherein the ultrasonic sensor (2) comprises the test control device (10).

8. A vehicle (11) with at least one ultrasonic sensor system (1) according to any one of claims 1 to 7.

9. A method for operating an ultrasonic sensor system (1) for a vehicle (11), which comprises an ultrasonic sensor (2) with an electro-acoustic transducer arrangement (7) for generating and detecting ultrasonic waves and an electrical testing device (8), and further comprises a test control device (10), the method comprising the steps of:
Outputting (S1) an electrical test signal to the electro-acoustic transducer arrangement (7) by means of the testing device (8);
Detecting (S2) an electrical response signal from the electro-acoustic transducer arrangement (7) by means of the testing device (8); and
Detecting (S3), by varying a frequency and an amplitude of the electrical test signal, a characteristic parameter of the electrical response signal at multiple measurement points (14, 15) by the test control device (10),
wherein the multiple measurement points each comprise exactly one measurement point for a number of different frequencies within a frequency range, wherein the amplitude of the respective measurement point is selected as a function of the frequency of the measurement point, **characterized in that**, of the amplitudes of any two measurement points at adjacent frequencies within the frequency range, one amplitude is selected at a lower limit and the other amplitude is selected at an upper limit of an amplitude range chosen as a function of the adjacent frequencies.

## Revendications

1. Système de capteur ultrasonique (1) pour un véhicule (11), comprenant :
un capteur ultrasonique (2) avec un agencement de transducteur électro-acoustique (7) pour générer et détecter des ondes ultrasoniques et un dispositif de test électrique (8) configuré pour délivrer un signal de test électrique à l'agencement de transducteur électro-acoustique (7) et pour détecter un signal de réponse électrique de l'agencement de transducteur électro-acoustique (7) au signal de test électrique, et
un dispositif de commande de test (10) configuré pour détecter un paramètre caractéristique du signal de réponse électrique au moyen du dispositif de test électrique (8) à de multiples points de mesure (14, 15) en faisant varier une fréquence et une amplitude du signal de test électrique,
dans lequel les multiples points de mesure (14, 15) comprennent chacun exactement un point de mesure (14, 15) pour un certain nombre de fréquences différentes à l'intérieur d'une plage de fréquences,
dans lequel l'amplitude du point de mesure respectif (14, 15) est sélectionnée en fonction de la fréquence du point de mesure (14, 15),
**caractérisé en ce que**, parmi les amplitudes de deux points de mesure quelconques (14, 15) à des fréquences adjacentes à l'intérieur de la plage de fréquences, une amplitude est sélectionnée à une limite inférieure et l'autre amplitude est sélectionnée à une limite supérieure d'une plage d'amplitudes choisie en fonction des fréquences adjacentes.

2. Le système de capteur ultrasonique selon la revendication 1, dans lequel le signal de test électrique est un signal à courant constant, et le paramètre caractéristique respectif comprend une amplitude et/ou une position de phase de la tension du signal de réponse à la fréquence et l'amplitude du signal de test électrique au point de mesure respectif (14, 15).

3. Le système de capteur ultrasonique selon l'une quelconque des revendications précédentes, dans lequel les multiples points de mesure (14, 15) du signal de test sont sélectionnés pour correspondre à des points de fonctionnement d'un signal de commande pour le capteur ultrasonique (2) pendant l'exécution d'une mesure de distance.

4. Le système de capteur ultrasonique selon la revendication 1, dans lequel les multiples points de mesure (14, 15) à l'intérieur de la plage de fréquences sont sélectionnés pour être plus rapprochés dans une première section de fréquence (17), dans laquelle un gradient élevé du paramètre caractéristique à détecter a été déterminé lors d'un test précédent de l'agencement de transducteur électro-acoustique, que dans une section de fréquence (16), dans laquelle un gradient plus faible que le gradient élevé a été déterminé.

5. Le système de capteur ultrasonique selon l'une quelconque des revendications 1 à 4, dans lequel le dispositif de commande de test (10) est configuré pour rapporter un état de l'agencement de transducteur électro-acoustique (7) à un dispositif de commande (3) du véhicule à moteur (11) en fonction des multiples paramètres caractéristiques détectés par le dispositif de commande de test (10).

6. Le système de capteur ultrasonique selon l'une quelconque des revendications 1 à 5, comprenant en outre un dispositif de commande de mesure (9) configuré pour exciter l'agencement de transducteur électro-acoustique (7) à émettre une onde ultrasonore en appliquant un signal de commande électrique et pour effectuer une mesure de distance en détectant et évaluant ultérieurement un signal de détection électrique provenant de l'agencement de transducteur électro-acoustique (7), dans lequel le dispositif de commande de mesure (9) est configuré pour effectuer la mesure de distance en fonction des multiples paramètres caractéristiques détectés par le dispositif de commande de test (10).

7. Le système de capteur ultrasonique selon l'une quelconque des revendications 1 à 6, dans lequel le capteur ultrasonique (2) comprend le dispositif de commande de test (10).

8. Un véhicule (11) avec au moins un système de capteur ultrasonique (1) selon l'une quelconque des revendications 1 à 7.

9. Un procédé de fonctionnement d'un système de capteur ultrasonique (1) pour un véhicule (11), qui comprend un capteur ultrasonique (2) avec un agencement de transducteur électro-acoustique (7) pour générer et détecter des ondes ultrasoniques et un dispositif de test électrique (8), et comprend en outre un dispositif de commande de test (10), le procédé comprenant les étapes consistant à :
Émettre (S1) un signal de test électrique vers l'agencement de transducteur électro-acoustique (7) au moyen du dispositif de test (8) ;
Détecter (S2) un signal de réponse électrique provenant de l'agencement de transducteur électro-acoustique (7) au moyen du dispositif de test (8) ; et
Détecter (S3), en faisant varier une fréquence et une amplitude du signal de test électrique, un paramètre caractéristique du signal de réponse électrique à de multiples points de mesure (14, 15) par le dispositif de commande de test (10),
dans lequel les multiples points de mesure comprennent chacun exactement un point de mesure pour un certain nombre de fréquences différentes à l'intérieur d'une plage de fréquences, dans lequel l'amplitude du point de mesure respectif est sélectionnée en fonction de la fréquence du point de mesure, **caractérisé en ce que**, parmi les amplitudes de deux points de mesure quelconques à des fréquences adjacentes à l'intérieur de la plage de fréquences, une amplitude est sélectionnée à une limite inférieure et l'autre amplitude est sélectionnée à une limite supérieure d'une plage d'amplitudes choisie en fonction des fréquences adjacentes.
